(19) Europäisches Patentamt European Patent Office Office européen des brevets

(11) **EP 4 607 415 A1**

(12) **EUROPEAN PATENT APPLICATION**
published in accordance with Art. 153(4) EPC

(43) Date of publication:
**27.08.2025 Bulletin 2025/35**

(21) Application number: **23885020.0**

(22) Date of filing: **02.11.2023**

(51) International Patent Classification (IPC):
**G06N 20/20** (2019.01)   **G06N 3/04** (2023.01)

(52) Cooperative Patent Classification (CPC):
**G06N 3/04; G06N 3/08; G06N 20/20**

(86) International application number:
**PCT/CN2023/129211**

(87) International publication number:
**WO 2024/094094 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022   CN 202211364320**

(71) Applicant: **Huawei Technologies Co., Ltd.**
**Shenzhen, Guangdong 518129 (CN)**

(72) Inventors:
• **ZHANG, Yu**
  **Hong Kong (CN)**
• **LU, Jiaxun**
  **Shenzhen, Guangdong 518129 (CN)**
• **SHAO, Yunfeng**
  **Shenzhen, Guangdong 518129 (CN)**
• **XU, Hong**
  **Hong Kong (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **MODEL TRAINING METHOD AND APPARATUS**

(57)    This application discloses a model training method, applied to the federated learning field, including: obtaining a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning; selecting some gradients from the plurality of first gradients and the plurality of second gradients, where the some gradients are used to update the target model in a current round of iteration of federated learning; and transmitting information about an updated target model to a plurality of first devices, where the plurality of first devices belong to the plurality of terminals. In this application, because the server selects and updates only values of some parameters in the target model each time, a gradient transmission amount from the server to the terminal can be effectively reduced.

Obtain a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning — 501

Select some gradients from the plurality of first gradients and the plurality of second gradients, where the some gradients are used to update the target model in a current round of iteration of federated learning — 502

Transmit information about an updated target model to a plurality of first devices, where the plurality of first devices belong to a plurality of terminals — 503

FIG. 5

## Description

This application claims priority to Chinese Patent Application No. 202211364320.6, filed with the China National Intellectual Property Administration on November 2, 2022 and entitled "MODEL TRAINING METHOD AND APPARATUS", which is incorporated herein by reference in its entirety.

## TECHNICAL FIELD

This application relates to the artificial intelligence field, and in particular, to a model training method and apparatus.

## BACKGROUND

Artificial intelligence (artificial intelligence, AI) is a theory, a method, a technology, and an application system in which human intelligence is simulated, extended, and expanded by using a digital computer or a machine controlled by a digital computer, to perceive an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is to research design principles and implementation methods of various intelligent machines, so that the machines have perception, inference, and decision-making functions.

A federated learning (federated learning) system trains a machine learning model based on data generated through interaction between a large quantity of users and devices (for example, a smartphone) of the users, and does not need to extract data from the devices. For example, a subset of online devices is selected in each loop, and a current version of the machine learning model is sent to the selected device. Each selected device is assigned a computing model update task based on data that is locally generated and locally stored. The model update is then sent back to a server, averaged, and applied to a model of the server, to generate a new version of the model for a next iteration of the user (for example, a next subset of devices).

Federated learning includes two steps: model delivery and model upload. A central node delivers a model to a terminal device through a network. Each terminal device calculates a gradient of the model based on local data. Each distributed node encrypts the gradient and uploads the encrypted gradient to the central node. The central node summarizes gradients of distributed nodes of terminals, and updates a parameter of the model of the central node according to a parameter average algorithm.

When training starts, the server sends an initial model to each client side. Then, after performing several iterations on the model by using local data, different client sides feed back model change amounts (that is, gradients corresponding to parameters) to the server. The server performs weighted averaging on the feedback gradients, updates the initial model by using an obtained average gradient, delivers an updated model to each client-side user, and restarts a next round of iteration.

A problem of an existing federated training framework is as follows: When user data is non-independently and identically distributed, because gradient directions after iterations of user nodes vary greatly, the server cannot obtain an effective model gradient update direction. Consequently, the server is slow in model convergence, and a large quantity of gradients need to be transmitted between the client-side user and the server, consuming a large amount of communication resources. However, in a current network environment, a growth speed of an overall network bandwidth is far less than that of a size of a neural network model. Therefore, how to effectively reduce communication overheads is an urgent problem to be resolved in federated learning.

## SUMMARY

This application provides a model training method, to effectively reduce a gradient transmission amount from a server to a terminal.

According to a first aspect, this application provides a model training method, applied to a server. The server communicates with a plurality of terminals. The method includes: obtaining a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning; selecting some gradients from the plurality of first gradients and the plurality of second gradients, where the some gradients are used to update the target model in a current round of iteration of federated learning; and transmitting information about an updated target model to a plurality of first devices, where the plurality of first devices belong to the plurality of terminals.

Because only values of some parameters are selected and updated in the target model each time, a gradient transmission amount from the server to the terminal can be effectively reduced.

In a possible implementation, the some gradients are a plurality of largest gradients in the plurality of first gradients and the plurality of second gradients.

In a possible implementation, the plurality of first gradients are obtained by aggregating a plurality of third gradients sent by a plurality of second devices in the current round of iteration, the plurality of second gradients are obtained based on gradients that correspond to the plurality of second parameters and that are determined in the previous round of iteration and a plurality of fourth gradients sent by the plurality of second devices in the current round of iteration, and the plurality of second devices belong to the plurality of terminals.

In a possible implementation, the information about the target model includes a parameter update amount of the updated target model relative to a first model, and the first model is a model obtained by updating the target model in a round of iteration before the current round of iteration. Before the obtaining a plurality of first gradients and a plurality of second gradients, the method further includes: broadcasting a parameter value of the updated first model to the plurality of terminals.

In the foregoing manner, a quantity of gradient differences between a latest target model and a client-side user model is reduced, thereby ensuring that downlink communication traffic compression effect is not degraded.

In a possible implementation, the information about the target model includes a parameter update amount of the updated target model relative to a second model, and the second model is an initial model of the target model.

In a possible implementation, the information about the target model includes a parameter update amount of the updated target model relative to a third model, the plurality of first devices includes a first target device, and the third model is a model obtained by updating the target model in a round of iteration before the current round of iteration by the first target device. The transmitting information about an updated target model to a plurality of first devices includes: transmitting the parameter update amount of the updated target model relative to the third model to the first target device.

In a possible implementation, the round of iteration before the current round of iteration is specifically a latest round of iteration in which the first target device updates the target model before the current round of iteration.

The server side may maintain an existing target model list of the client-side user, and when delivering the update amount, perform differentiation with a parameter of a public model on the corresponding client side, to improve a communication compression amount of delivering the gradients. According to the foregoing method, the server maintains the latest model parameter list of the client-side user, to reduce a quantity of gradient differences between the latest target model and the client-side user model when the gradients are delivered, thereby maximally maintaining downlink communication traffic compression effect.

According to a second aspect, this application provides a system. The system includes a server and a plurality of terminals. The server communicates with the plurality of terminals.

The server is configured to: obtain a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning;

select some gradients from the plurality of first gradients and the plurality of second gradients, where the some gradients are used to update the target model in a current round of iteration of federated learning; and
transmit information about an updated target model to a plurality of first devices, where the plurality of first devices and the plurality of second devices belong to the plurality of terminals.

In a possible implementation, the some gradients are a plurality of largest gradients in the plurality of first gradients and the plurality of second gradients.

In a possible implementation, the plurality of second devices in the plurality of terminals are configured to send a plurality of third gradients and a plurality of fourth gradients to the server. The plurality of third gradients are gradients corresponding to the plurality of first parameters in the target model. The plurality of fourth gradients are gradients corresponding to the plurality of second parameters in the target model. The plurality of first parameters are updated in the previous round of iteration of federated learning. The plurality of second parameters are not updated in the previous round of iteration of federated learning.

The server is specifically configured to: aggregate the plurality of third gradients to obtain the plurality of first gradients; and
aggregate the plurality of fourth gradients, and merge the plurality of fourth gradients with gradients that correspond to the plurality of second parameters and that are determined in the previous round of iteration, to obtain the plurality of second gradients.

In a possible implementation, the plurality of second devices in the plurality of terminals are specifically configured to: determine, in the previous round of iteration of federated learning, a plurality of gradients corresponding to the target model; and randomly select the plurality of third gradients and the plurality of fourth gradients from the plurality of gradients.

In a possible implementation, the plurality of second devices in the plurality of terminals are specifically configured to: perform lossless compression or linear unbiased compression on information indicating the plurality of third gradients and the plurality of fourth gradients, and send a compression result to the server.

Linear unbiased compression means a linear compression manner. Compressed data may be decompressed after a linear operation is performed. An obtained result is the same as a result obtained after the same linear operation is performed on uncompressed raw data.

Unbiased compression means that an error between a compressed result and raw data is a zero mean.

In a possible implementation, the information about the target model includes a parameter update amount of the updated target model relative to a first model, and the first model is a model obtained by updating the target model in a round of iteration before the current round of iteration.

The server is further configured to: before obtaining the plurality of first gradients and the plurality of second gradients, broadcast a parameter value of the updated first model to the plurality of terminals.

In a possible implementation, the information about the target model includes a parameter update amount of the updated target model relative to a second model, and the second model is an initial model of the target model.

In a possible implementation, the information about the target model includes a parameter update amount of the updated target model relative to a third model. The plurality of first devices includes a first target device. The third model is a model obtained by updating the target model in a round of iteration before the current round of iteration by the first target device.

The server is specifically configured to transmit the parameter update amount of the updated target model relative to the third model to the first target device.

In a possible implementation, the round of iteration before the current round of iteration is specifically a latest round of iteration in which the first target device updates the target model before the current round of iteration.

According to a third aspect, this application provides a model training apparatus, used in a server. The server communicates with a plurality of terminals. The apparatus includes:

an obtaining module, configured to obtain a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning;

a gradient selection module, configured to select some gradients from the plurality of first gradients and the plurality of second gradients, where the some gradients are used to update the target model in a current round of iteration of federated learning;

and

a sending module, configured to transmit information about an updated target model to a plurality of first devices, where the plurality of first devices belong to the plurality of terminals.

In a possible implementation, the some gradients are a plurality of largest gradients in the plurality of first gradients and the plurality of second gradients.

In a possible implementation, the plurality of first gradients are obtained by aggregating a plurality of third gradients sent by a plurality of second devices in the current round of iteration, the plurality of second gradients are obtained based on gradients that correspond to the plurality of second parameters and that are determined in the previous round of iteration and a plurality of fourth gradients sent by the plurality of second devices in the current round of iteration, and the plurality of second devices belong to the plurality of terminals.

In a possible implementation, the information about the target model includes a parameter update amount of the updated target model relative to a first model, and the first model is a model obtained by updating the target model in a round of iteration before the current round of iteration.

The sending module is further configured to: before the plurality of first gradients and the plurality of second gradients are obtained, broadcast a parameter value of the updated first model to the plurality of terminals.

In a possible implementation, the information about the target model includes a parameter update amount of the updated target model relative to a second model, and the second model is an initial model of the target model.

In a possible implementation, the information about the target model includes a parameter update amount of the updated target model relative to a third model. The plurality of first devices includes a first target device. The third model is a model obtained by updating the target model in a round of iteration before the current round of iteration by the first target device.

The sending module is specifically configured to transmit the parameter update amount of the updated target model relative to the third model to the first target device.

In a possible implementation, the round of iteration before the current round of iteration is specifically a latest round of iteration in which the first target device updates the target model before the current round of iteration.

According to a fourth aspect, an embodiment of this application provides a model training apparatus that may include a memory, a processor, and a bus system. The memory is configured to store a program. The processor is configured to execute the program in the memory, to perform the method in any one of the first aspect and the optional implementation of the first aspect.

According to a fifth aspect, an embodiment of this application provides a computer-readable storage medium. The computer-readable storage medium stores a computer program, and when the computer program is run on a computer, the computer is enabled to perform the method in any one of the first aspect and the optional implementation of the first aspect.

According to a sixth aspect, an embodiment of this application provides a computer program. When the computer program is run on a computer, the computer is enabled to perform the method in any one of the first aspect and the optional implementation of the first aspect.

According to a seventh aspect, this application provides a chip system. The chip system includes a processor, configured to support an execution device in implementing functions in the foregoing aspects, for example, sending or processing data or information in the foregoing method. In a possible design, the chip system further includes a memory. The memory is configured to store program instructions and data that are necessary for the execution device or a training device. The chip system may include a chip, or may include a chip and another discrete component.

**BRIEF DESCRIPTION OF DRAWINGS**

FIG. 1 is a diagram of a structure of an artificial intelligence main framework;

FIG. 2 is a diagram of a computing system for model training according to an embodiment of this application;

FIG. 3 is a diagram of an architecture of a system according to an embodiment of this application;

FIG. 4 is a diagram of an architecture of a model training method according to an embodiment of this application;

FIG. 5 is a schematic flowchart of a model training method according to an embodiment of this application;

FIG. 6 to FIG. 9 are examples of a model training method according to an embodiment of this application;

FIG. 10 is a diagram of a model training apparatus according to an embodiment of this application;

FIG. 11 is a diagram of a structure of an execution device according to an embodiment of this application;

FIG. 12 is a diagram of a structure of a training device according to an embodiment of this application; and

FIG. 13 is a diagram of a structure of a chip according to an embodiment of this application.

**DESCRIPTION OF EMBODIMENTS**

The following describes embodiments of the present invention with reference to accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, the claims, and the accompanying drawings of this application, the terms "first", "second", and the like are intended to distinguish similar objects but do not necessarily indicate a specific order or sequence. It should be understood that the terms used in such a way are interchangeable in appropriate circumstances, and this is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

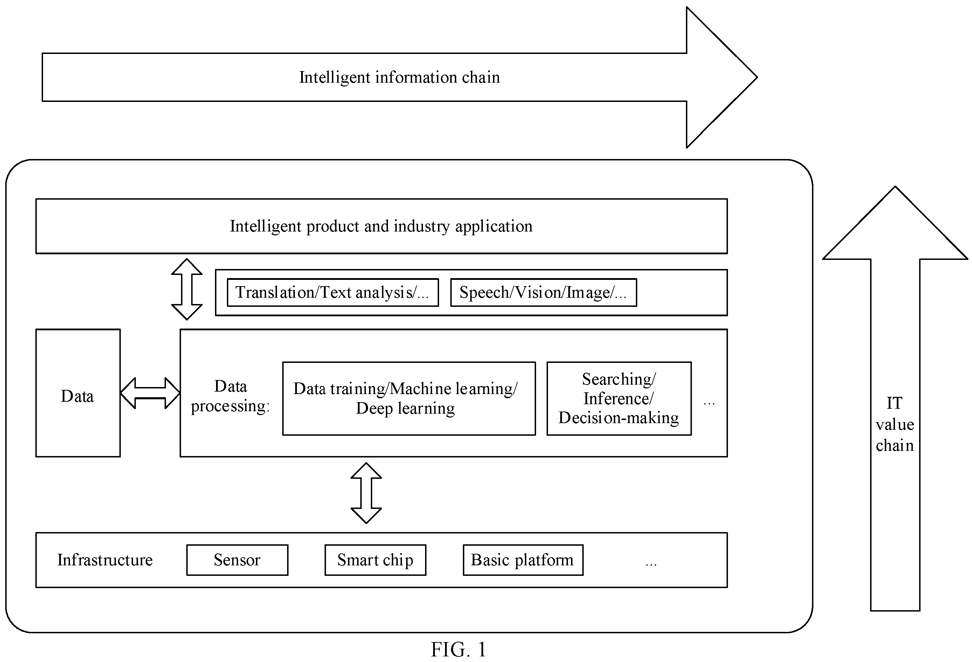

An overall working procedure of an artificial intelligence system is first described. Refer to FIG. 1. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the processes may be general processes of intelligent information perception, intelligent information representation and formation, intelligent inference, intelligent decision-making, and intelligent execution and output. In these processes, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of things data of a conventional device, and includes service data of an existing system and perception data such as force, displacement, a liquid level, a temperature, and humidity.

(3) Model training

Model training usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. Typical functions are searching and matching.

Decision making is a process of making a decision after intelligent information is inferred, and usually provides functions such as classification, ranking, and prediction.

(4) General capability

After model training mentioned above is performed on the data, some general capabilities may be further formed based on a model training result. For example, the general capability may be an algorithm or a general system, for example, translation, text analysis, computer vision processing, speech recognition, or image recognition.

(5) Intelligent product and industry application

The intelligent products and industry applications are products and applications of the artificial intelligence system in various fields, encapsulate overall solutions of artificial intelligence, and mean that intelligent information decisions are turned into products and are applied. Fields to which the artificial intelligence system is applied mainly include an intelligent terminal, intelligent transportation, intelligent healthcare, self-driving, a safe city, and the like.

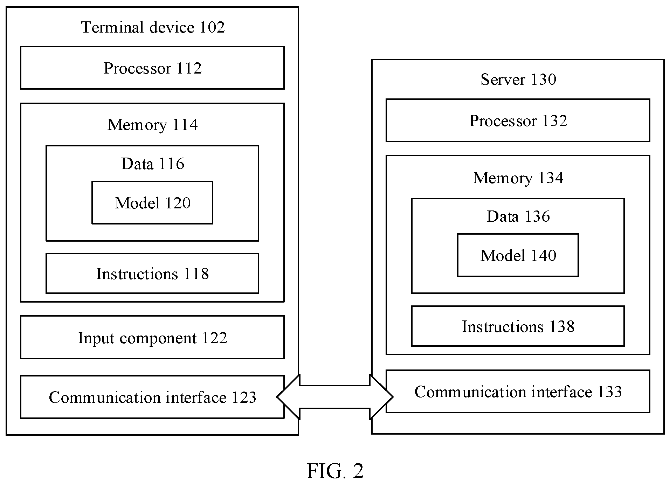

FIG. 2 is a diagram of a computing system for model training according to an embodiment of this application. The computing system includes a terminal device 102 (which may be referred to as a first device and a second device in the following) and a server 130 (which may also be referred to as a central node) that are communicatively coupled through a network. The terminal device 102 may be any type of computing device, for example, a personal computing device (for example, a laptop computer or a desktop computer), a mobile computing device (for example, a smartphone or a tablet), a game console or controller, a wearable computing device, an embedded computing device, or another type of computing device.

The terminal device 102 may include a processor 112 and a memory 114. The processor 112 may be any appropriate processing device (for example, a processor core, a microprocessor, an application-specific integrated circuit (application-specific integrated circuit, ASIC), a field programmable gate array (field programmable gate array, FPGA), a controller, or a microcontroller). The memory 114 may include but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM). The memory 114 may store data 116 and instructions 118 that are executed by the processor 112, so that the terminal device 102 performs an operation.

In some implementations, the memory 114 may store one or more models 120. For example, the model 120 may be or may additionally include various machine learning models, for example, a neural network (for example, a deep neural network) or another type of machine learning model, including a nonlinear model and/or a linear model. The neural network may include a feedforward neural network, a recurrent neural network (for example, a long short-term memory recurrent neural network), a convolutional neural network, or a neural network in another form.

In some implementations, the one or more models 120 may be received through a network 180 from the server 130, stored in the memory 114, and then used or implemented by one or more processors 112.

The terminal device 102 may further include one or more user input components 122 that receive a user input. For example, the user input component 122 may be a touch-sensitive component (for example, a touch-sensitive display or a touchpad) that is sensitive to a touch of a user input object (for example, a finger or a stylus). The touch-sensitive component may be configured to implement a virtual keyboard. For another example, the user input component includes a microphone, a conventional keyboard, or another apparatus through which a user can provide a user input.

The terminal device 102 may further include a communication interface 123, and the terminal device 102 may be communicatively connected to the server 130 through the communication interface 123. The server 130 may include a communication interface 133, and the terminal device 102 may be communicatively connected to the communication interface 133 of the server 130 through the communication interface 123, to implement data exchange between the terminal device 102 and the server 130.

The server 130 may include a processor 132 and a memory 134. The processor 132 may be any appropriate processing device (for example, a processor core, a microprocessor, an application-specific integrated circuit (application-specific integrated circuit, ASIC), a field programmable gate array (field programmable gate array, FPGA), a controller, or a microcontroller). The memory 134 may include but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM). The memory 134 may store data 136 and instructions 138 that are executed by the processor 132, so that the server 130 performs an operation.

As described above, the memory 134 may store one or more machine learning models 140. For example, the model 140 may be or may additionally include various machine learning models. For example, the machine learning model includes a neural network or another multi-layer nonlinear model. For example, the neural network includes a feedforward neural network, a deep neural network, a recursive neural network, and a convolutional neural network.

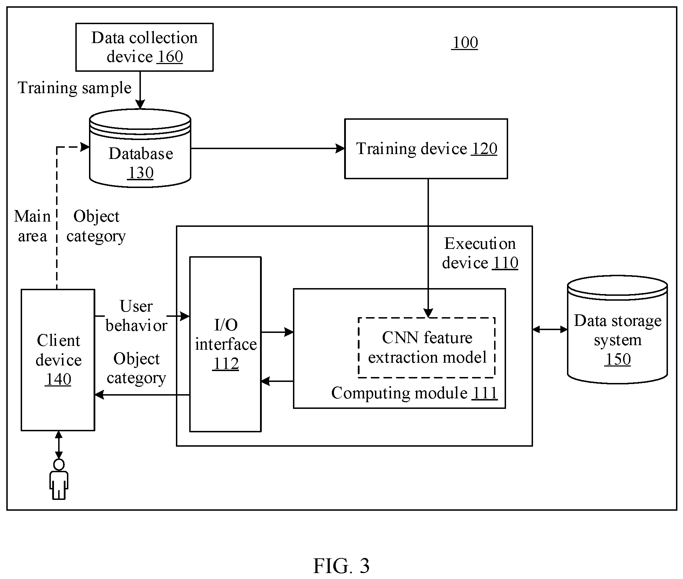

FIG. 3 is a diagram of an architecture of a system 100 according to an embodiment of this application. In FIG. 3, an execution device 110 configures an input/output (input/output, I/O) interface 112, configured to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computing module 111 of the execution device 110 performs related processing such as computing (for example, performs function implementation of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, thereby providing a required result for the user.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in a database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of an architecture of a system according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output the target model/rule.

The neural-network processing unit NPU serves as a coprocessor, and is disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing engines (process engines, PEs) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory 1 to perform a matrix operation on the matrix B, and stores an obtained partial result or an obtained final result of the matrix in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit, to generate an activation value. In some implementations, the vector calculation unit generates a normalized value, a combined value, or both a normalized value and a combined value. In some implementations, the processed output vector can be used as an activation input to the operation circuit. For example, the processed output vector can be used at a subsequent layer in the neural network.

A unified memory is configured to store input data and output data.

For weight data, a direct memory access controller (direct memory access controller, DMAC) transfers input data in the external memory to the input memory 1 and/or the unified memory, weight data in the external memory is stored into the weight memory, and the data in the unified memory is stored into the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory 1, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f\left(\sum\nolimits_{s=1}^{n} W_{s}x_{s} + b\right) \text{(1-1)}$$

Herein, s=1, 2, ..., or n, n is a natural number greater than 1, Ws is a weight of xs, b is a bias of the neuron, and f is an activation function (activation function) of the neuron, and is used to introduce a nonlinear feature into the neural network to convert an input signal in the neuron into an output signal. The output signal of the activation function may be used as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be an area including several neurons.

Work at each layer of the neural network may be described by using a mathematical expression $\vec{y} = a(W\vec{x} + b)$. From a physical perspective, the work at each layer of the neural network may be understood as completing transformation from input space to output space (that is, from row space of a matrix to column space of the matrix) through five operations on the input space (a set of input vectors). The five operations include: 1. dimensionality increase/dimensionality reduction; 2. scaling up/down; 3.

rotation; 4. translation; and 5. "bending". The operations 1, 2, and 3 are completed by using $W\vec{x}$, the operation 4 is completed by using $+b$, and the operation 5 is completed by $a()$. The word "space" is used herein for expression because a classified object is not a single thing, but a type of things. Space is a set of all individuals of this type of things. Herein, $W$ is a weight vector, and each value in the vector indicates a weight value of a neuron at the layer of the neural network. The vector $W$ determines spatial transformation from the input space to the output space described above, that is, a weight $W$ of each layer controls how to perform spatial transformation. An objective of training the neural network is to finally obtain a weight matrix (a weight matrix formed by vectors $W$ at a plurality of layers) at all layers of a trained neural network. Therefore, a training process of the neural network is essentially a manner of learning control of spatial transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, the neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(3) Federated learning

When a distributed machine learning modeling method for privacy protection is compared with conventional centralized modeling, in federated learning, each does not directly share data, but performs distributed training through model sharing.

(4) Federated learning in a parameter server framework

Currently, in a relatively mainstream federated learning mode, several edge nodes and a central node are included. The edge node receives a model distributed by the central node, uses local data on this basis to train the model, and sends a model to the central node. The central node collects a model of each edge node, aggregates the models into a global model, and distributes the global model to each edge node to start a new round of training iteration.

(5) Non-independent and identical distribution

In federated learning context, data distribution on each client-side user is different. "Independent and identical distribution" means that data of terminals is distributed independently and identically.

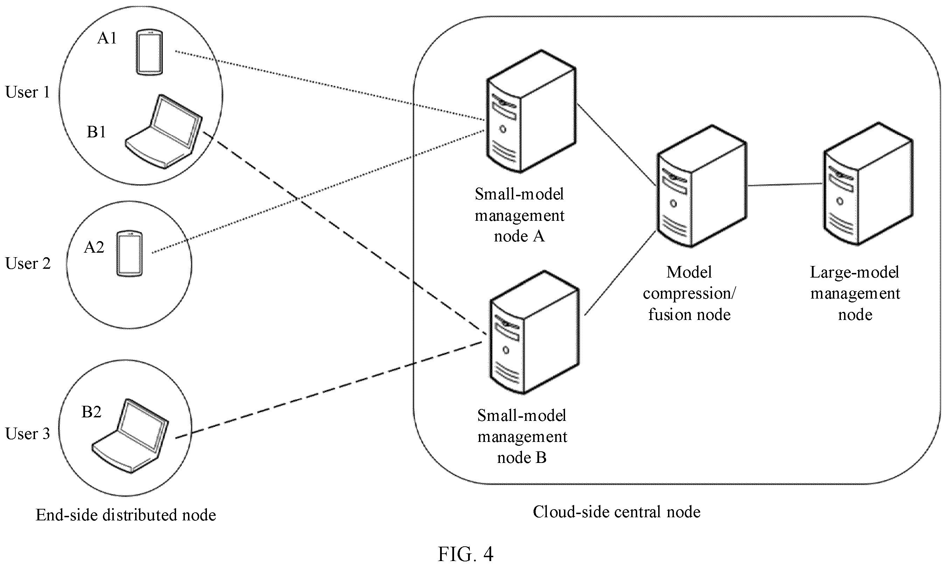

Refer to FIG. 4. FIG. 4 is a diagram of an architecture of a model training method according to an embodiment of this application. As shown in FIG. 4, the architecture provided in this embodiment of this application includes a central node on a cloud side, for example, a server on the cloud side. A1, A2, ..., and the like are distributed nodes (which may be referred to as terminals in this application) of a type A, for example, a mobile phone product held by a user. B1, B2, ..., and the like are distributed nodes with a type of B, for example, a personal computer held by the user. After consent of an administrator (for example, the user of the mobile phone or the computer) of the distributed node, the administrator of the distributed node voluntarily shares data generated in daily usage of the device when privacy is protected, and the data is added to a model training plan. The device becomes a distributed node in the architecture. The system in this embodiment may also include more types of distributed nodes, for example, a smartwatch. To protect data privacy, the distributed node does not upload data to the central node, and stores data locally. The distributed node is connected to a cloud server through a communication network. The central node on the cloud side can run a large model, but each distributed node can run only a small model due to a limitation of a hardware capability. In addition, A and B can have different model training capabilities.

When training starts, the server sends an initial model to each client side. Then, after performing several iterations on the model by using local data, different client sides feed back model change amounts (that is, gradients corresponding to parameters) to the server. The server performs weighted averaging on the feedback gradients, updates the initial model by using an obtained average gradient, delivers an updated model to each client-side user, and restarts a next round of iteration.

A problem of an existing federated training framework is as follows: When user data is non-independently and identically distributed, because gradient directions after iterations of user nodes vary greatly, the server cannot obtain an effective model gradient update direction. Consequently, the server is slow in model convergence, and a large quantity of gradients need to be transmitted between the client-side user and the server, consuming a large amount of communication resources. However, in a current network environment, a growth speed of an overall network bandwidth is far less than that of a size of a neural network model. Therefore, how to effectively reduce communication overheads is an urgent problem to be resolved in federated learning.

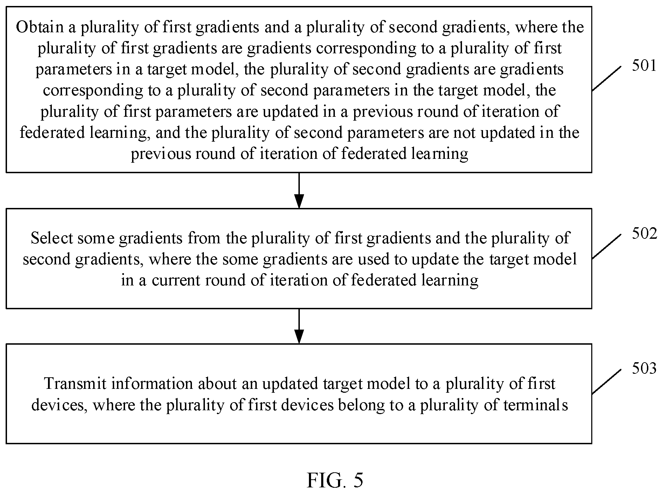

Refer to FIG. 5. FIG. 5 is a schematic flowchart of a model training method according to an embodiment of this application. As shown in FIG. 5, the model training method provided in this embodiment of this application includes the following steps.

501: A server obtains a plurality of first gradients and a plurality of second gradients. The plurality of first gradients are gradients corresponding to a plurality of first parameters in a target model. The plurality of second gradients are gradients corresponding to a plurality of second parameters in the target model. The plurality of first parameters are updated in a previous round of iteration of federated learning. The plurality of second parameters are not updated in the previous round of iteration of federated learning.

In a possible implementation, the target model may be a model training object of federated learning, and the target model may include a neural network or another multi-layer nonlinear model. For example, the neural network may include a feedforward neural network, a deep neural network, a recursive neural network, and a convolutional neural network.

In this embodiment of this application, after receiving the initial model that is of the target model and that is sent by the server, the plurality of devices may train the target model by using local data, obtain gradients in a training process, and then upload the gradients to the server. Optionally, to protect information privacy in the transmission process, the devices may upload the encrypted gradients to the server.

In a possible implementation, the server may receive gradients sent by some of the plurality of devices, and select some gradients from the gradients (and a gradient error in a previous iteration process, that is, a gradient that is not used for model update) to perform model update.

For example, the target model may include a parameter A, a parameter B, a parameter C, a parameter D, and a parameter E. The server may receive gradients sent by terminals and perform aggregation (the aggregation may be weighted averaging), to obtain a gradient corresponding to the parameter A, a gradient corresponding to the parameter B, and a gradient corresponding to the parameter C. The parameter C and the parameter D are parameters that are updated during model update performed by the server in a previous round of iteration. The parameter A, the parameter B, and the parameter E are parameters that are not updated during model update performed by the server in the previous round of iteration. The server may merge (for example, perform a summation operation on) gradients corresponding to the parameter A and the parameter B in model update performed by the server in the previous round of iteration and gradients that are of the parameter A and the parameter B and that are obtained through aggregation based on the gradients sent by the terminals in a current round of iteration, to obtain gradients of the parameter A and the parameter B in the current round of iteration. The server may use, as a gradient of the parameter C in the current round of iteration, a gradient that is of the parameter C and that is obtained through aggregation based on the gradients sent by the terminals. The server may use, as a gradient of the parameter E in the current round of iteration, a gradient corresponding to the parameter E in model update performed by the server in the previous round of iteration. The server may select gradients corresponding to some parameters from the parameter A, the parameter B, the parameter C, and the parameter E, to perform model update.

In a possible implementation, this embodiment of this application is described by using an example in which the plurality of first parameters are updated in the previous round of iteration of federated learning, and the plurality of second parameters are not updated in the previous round of iteration of federated learning.

In a possible implementation, the plurality of second devices in the plurality of devices (the plurality of second devices may be some of the plurality of devices) may obtain gradients of a plurality of parameters in the target model in an iteration process. For example, gradients (that is, a plurality of third gradients) corresponding to the plurality of first parameters in the target model may be obtained, and gradients (that is, a plurality of fourth gradients) corresponding to the plurality of second parameters in the target model may be obtained. The plurality of second devices may transmit the plurality of third gradients and the plurality of fourth gradients to the server.

In a possible implementation, the server may aggregate the plurality of third gradients sent by the plurality of second devices in a current round of iteration to obtain the plurality of first gradients; and the server may aggregate the plurality of fourth gradients sent by the plurality of second devices in the current round of iteration to obtain a plurality of gradients, and merge the plurality of gradients with gradients that correspond to the plurality of second parameters and that are determined in the previous round of iteration, to obtain the plurality of second gradients.

Optionally, during aggregation, a momentum gradient update method $g\_t = \varrho * g\_\{t - 1\} + g\_t$ may be used. In other words, a local gradient formed through current combination is no longer a simple sum of client-side gradients, but a weighted sum of a current gradient and a gradient in a previous round.

In a possible implementation, the plurality of second devices in the plurality of terminals are specifically configured to: determine, in the previous round of iteration of federated learning, a plurality of gradients corresponding to the target model; and randomly select the plurality of third gradients and the plurality of fourth gradients from the plurality of gradients.

In other words, after receiving a model parameter delivered by the server, a client side may perform model update by using local data, calculate an update gradient after a local round of iteration ends, randomly select k gradients from the update gradient by using a rand-k method, and upload the k gradients to the server.

In the foregoing manner, an unbiased compression solution is implemented on the client side, thereby avoiding a risk that a client-side user does not participate in federated training in each round of iteration.

In a possible implementation, the plurality of second devices in the plurality of terminals are specifically configured to: perform lossless compression or linear unbiased compression on information indicating the plurality of third gradients and the plurality of fourth gradients, and send a compression result to the server.

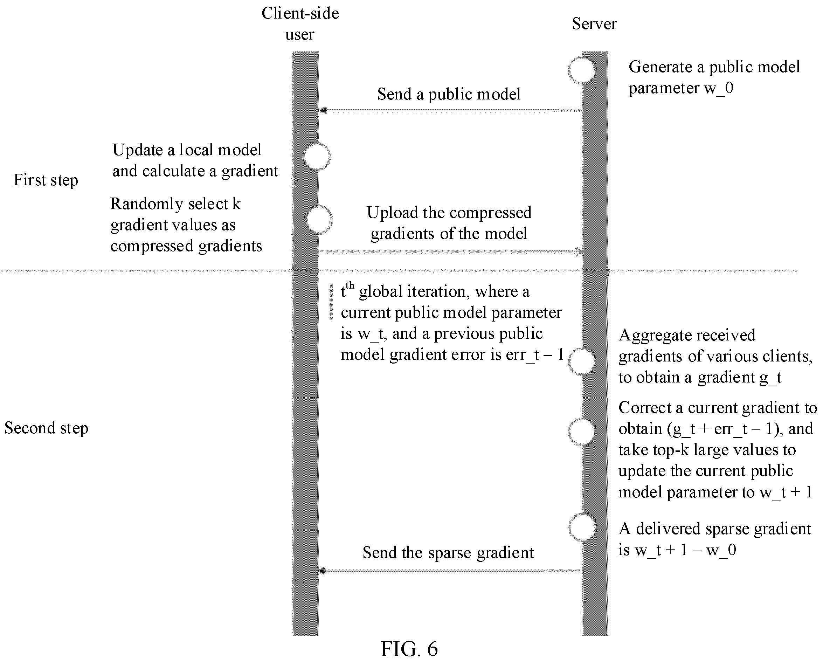

Refer to FIG. 6. FIG. 6 is a diagram of interaction between a server and a terminal.

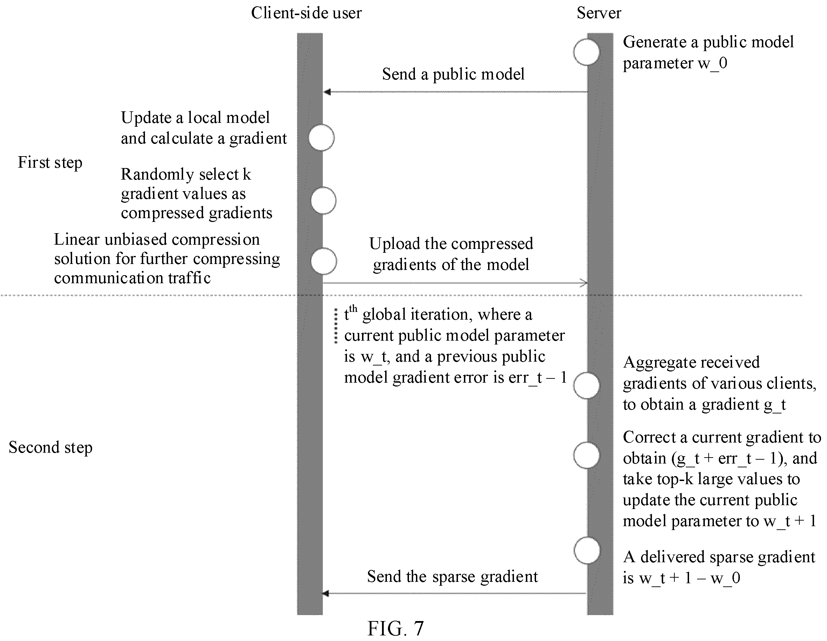

The following describes an embodiment of further compressing uplink communication traffic by using a linear unbiased compression solution. An interaction procedure is shown in FIG. 7 below. A difference from Embodiment 1 lies in that after the client side performs rand-k compression, the linear unbiased compression solution is further used to compress communication traffic (for example, a sketch compression method is used).

According to the foregoing method, the linear unbiased compression solution may be hardened in a network device, so that a processing capability of the network device is fully used to reduce network transmission pressure, thereby further reducing a communication amount uploaded by the client side to the server. In addition, the proposed linear unbiased compression solution can be hardened in the network device, so that performance of the network device can be fully utilized to reduce network communication pressure.

502: Select some gradients from the plurality of first gradients and the plurality of second gradients, where the some gradients are used to update the target model in a current round of iteration of federated learning.

In a possible implementation, the some gradients are a plurality of largest gradients in the plurality of first gradients and the plurality of second gradients.

In a possible implementation, a residual gradient error in a previous round is denoted as $err\_\{t - 1\}$, top-k gradient values in $(g\_t + err\_\{t - 1\})$ are used as update values in a current round, a current public model is updated to $w\_\{t + 1\}$, and $(g\_t + err\_\{t - 1\}) - \text{top-k} (g\_t + err\_\{t - 1\})$ is denoted as $err\_t$. The error may be used in a next round of iteration.

503: Transmit information about an updated target model to a plurality of first devices, where the plurality of first devices belong to the plurality of terminals.

In a possible implementation, the updated target model may be $w\_\{t + 1\}$, and the information about the updated target model may be delivered to a terminal (that is, the plurality of first devices in this embodiment of this application) that needs to participate in the next round of iteration.

Because only values of some parameters are selected and updated in the target model each time, a gradient transmission amount from the server to the terminal can be effectively reduced.

In a possible implementation, the information about the target model includes a parameter update amount of the updated target model relative to a second model, and the second model is an initial model of the target model.

In other words, the server may deliver $w\_\{t + 1\} - w\_0$ to the client side as a compressed gradient value, where $w\_0$ is the initial model of the target model.

In a possible implementation, the information about the target model includes a parameter update amount of the updated target model relative to a third model, the plurality of first devices includes a first target device, and the third model is a model obtained by updating the target model in a round of iteration before the current round of iteration by the first target device. The server may transmit the parameter update amount of the updated target model relative to the third model to the first target device.

In a possible implementation, the round of iteration before the current round of iteration is specifically a latest round of iteration in which the first target device updates the target model before the current round of iteration.

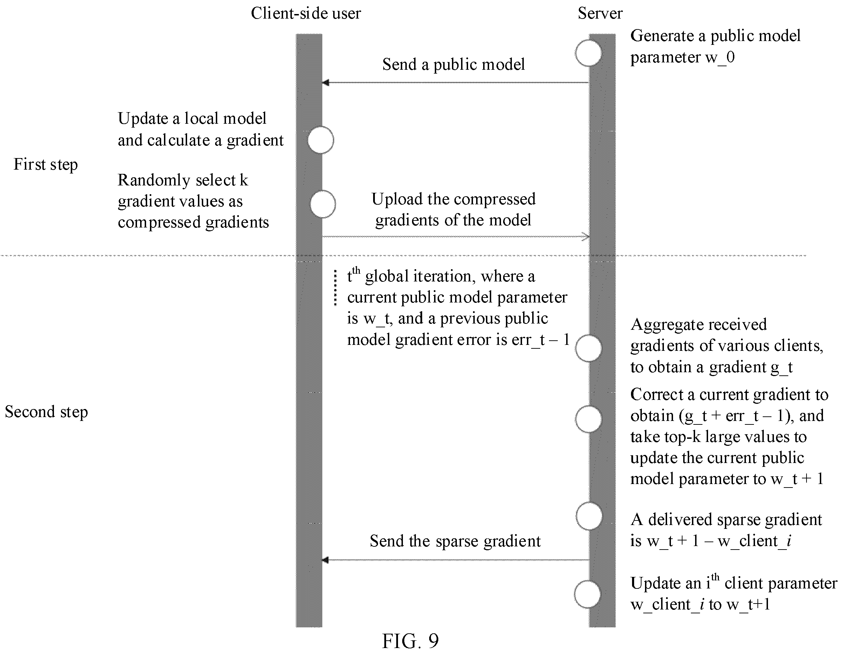

In a possible implementation, the server side may maintain an existing target model list of the client-side user, and when delivering the update amount, perform differentiation with a parameter of a public model on the corresponding client side, to improve a communication compression amount of delivering the gradients. A specific solution is shown in FIG. 9. According to the foregoing method, the server maintains the latest model parameter list of the client-side user, to reduce a quantity of gradient differences between the latest target model and the client-side user model when the gradients are delivered, thereby maximally maintaining downlink communication traffic compression effect.

In a possible implementation, the information about the target model includes a parameter update amount of the updated target model relative to a first model, and the first model is a model obtained by updating the target model in a round of iteration before the current round of iteration. Before the obtaining a plurality of first gradients and a plurality of second gradients, a parameter value of the updated first model may be broadcast to the plurality of terminals.

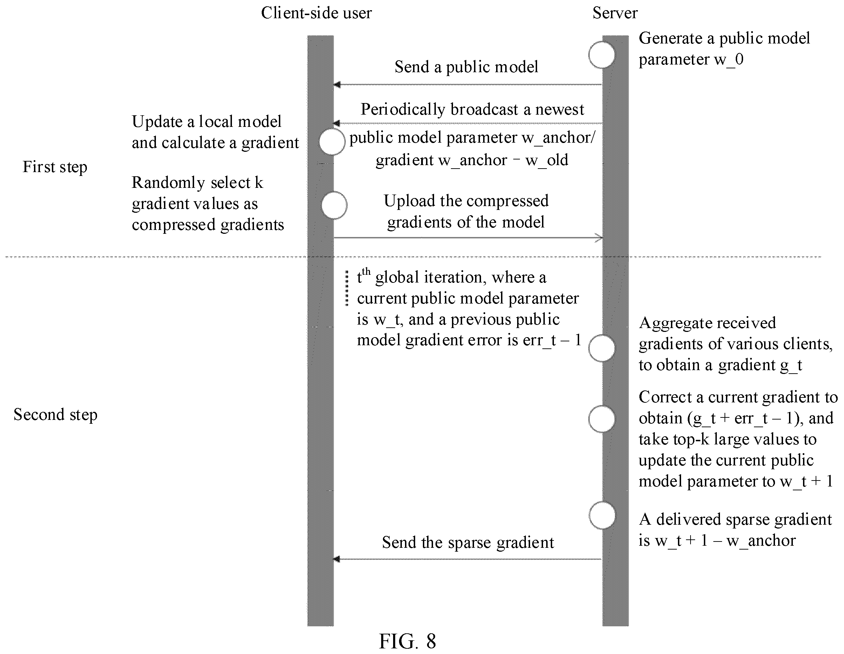

In a possible implementation, the server may broadcast (for example, periodically broadcast) a parameter solution of a current latest target model, to reduce a change quantity of a model gradient delivered by the cloud side. If the model gradient delivered by the cloud side is w_{t + 1} - w_0, when t is set to a large value, downlink model compression effect decreases significantly. In this case, a solution in which the server periodically broadcasts a current latest public model parameter (or a difference between a latest target model and a second latest target model) to all federated client-side users participating in training is used, to reduce the change quantity of the model gradient delivered by the cloud side. As shown in FIG. 8, w_anchor is the latest public model parameter periodically broadcast by the cloud server. In the foregoing manner, a quantity of gradient differences between the latest target model and a client-side user model is reduced, thereby ensuring that downlink communication traffic compression effect is not degraded.

An embodiment of this application provides a model training method, applied to a server. The server communicates with a plurality of terminals. The method includes: obtaining a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning; selecting some gradients from the plurality of first gradients and the plurality of second gradients, where the some gradients are used to update the target model in a current round of iteration of federated learning; and transmitting information about an updated target model to a plurality of first devices, where the plurality of first devices belong to the plurality of terminals.

Because only values of some parameters are selected and updated in the target model each time, a gradient transmission amount from the server to the terminal can be effectively reduced.

In addition, this application provides a system. The system includes a server and a plurality of terminals. The server communicates with the plurality of terminals.

The server is configured to: obtain a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning;

select some gradients from the plurality of first gradients and the plurality of second gradients, where the some gradients are used to update the target model in a current round of iteration of federated learning; and
transmit information about an updated target model to a plurality of first devices, where the plurality of first devices and the plurality of second devices belong to the plurality of terminals.

In a possible implementation, the some gradients are a plurality of largest gradients in the plurality of first gradients and the plurality of second gradients.

In a possible implementation, the plurality of second devices in the plurality of terminals are configured to send a plurality of third gradients and a plurality of fourth gradients to the server. The plurality of third gradients are gradients corresponding to the plurality of first parameters in the target model. The plurality of fourth gradients are gradients corresponding to the plurality of second parameters in the target model. The plurality of first parameters are updated in the previous round of iteration of federated learning. The plurality of second parameters are not updated in the previous round of iteration of federated learning.

The server is specifically configured to: aggregate the plurality of third gradients to obtain the plurality of first gradients; and
aggregate the plurality of fourth gradients, and merge the plurality of fourth gradients with gradients that correspond to the plurality of second parameters and that are determined in the previous round of iteration, to obtain the plurality of second gradients.

In a possible implementation, the plurality of second devices in the plurality of terminals are specifically configured to: determine, in the previous round of iteration of federated learning, a plurality of gradients corresponding to the target model; and randomly select the plurality of third gradients and the plurality of fourth gradients from the plurality of gradients.

In a possible implementation, the plurality of second devices in the plurality of terminals are specifically configured to: perform lossless compression or linear unbiased compression on information indicating the plurality of third gradients and the plurality of fourth gradients, and send a compression result to the server.

In a possible implementation, the information about the target model includes a parameter update amount of the updated target model relative to a first model, and the first model is a model obtained by updating the target model in a round of iteration before the current round of iteration.

The server is further configured to: before obtaining the plurality of first gradients and the plurality of second gradients, broadcast a parameter value of the updated first model to the plurality of terminals.

In a possible implementation, the information about the target model includes a parameter update amount of the updated target model relative to a second model, and the second model is an initial model of the target model.

In a possible implementation, the information about the target model includes a parameter update amount of the updated target model relative to a third model. The plurality of first devices includes a first target device. The third model is a model obtained by updating the target model in a round of iteration before the current round of iteration by the first target device.

The server is specifically configured to transmit the parameter update amount of the updated target model relative to the third model to the first target device.

In a possible implementation, the round of iteration before the current round of iteration is specifically a latest round of iteration in which the first target device updates the target model before the current round of iteration.

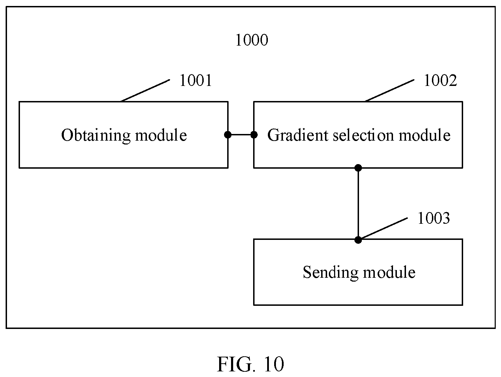

A model training apparatus provided in embodiments of this application is described from a perspective of an apparatus. Refer to FIG. 10. FIG. 10 is a diagram of a model training apparatus according to an embodiment of this application. As shown in FIG. 10, the model training apparatus 1000 provided in this embodiment of this application includes the following modules.

An obtaining module 1001 is configured to obtain a plurality of first gradients and a plurality of second gradients. The plurality of first gradients are gradients corresponding to a plurality of first parameters in a target model. The plurality of second gradients are gradients corresponding to a plurality of second parameters in the target model. The plurality of first parameters are updated in a previous round of iteration of federated learning. The plurality of second parameters are not updated in the previous round of iteration of federated learning.

For a specific description of the obtaining module 1001, refer to the description of step 501 in the foregoing embodiment. This is not described herein again.

A gradient selection module 1002 is configured to select some gradients from the plurality of first gradients and the plurality of second gradients. The some gradients are used to update the target model in a current round of iteration of federated learning.

For a specific description of the gradient selection module 1002, refer to the description of step 502 in the foregoing embodiment. This is not described herein again.

A sending module 1003 is configured to transmit information about an updated target model to a plurality of first devices. The plurality of first devices belong to the plurality of terminals.

For a specific description of the sending module 1003, refer to the description of step 503 in the foregoing embodiment. This is not described herein again.

In a possible implementation, the some gradients are a plurality of largest gradients in the plurality of first gradients and the plurality of second gradients.

In a possible implementation, the plurality of first gradients are obtained by aggregating a plurality of third gradients sent by a plurality of second devices in the current round of iteration, the plurality of second gradients are obtained based on gradients that correspond to the plurality of second parameters and that are determined in the previous round of iteration and a plurality of fourth gradients sent by the plurality of second devices in the current round of iteration, and the plurality of second devices belong to the plurality of terminals.

In a possible implementation, the information about the target model includes a parameter update amount of the updated target model relative to a first model, and the first model is a model obtained by updating the target model in a round of iteration before the current round of iteration.

The sending module is further configured to: before the plurality of first gradients and the plurality of second gradients are obtained, broadcast a parameter value of the updated first model to the plurality of terminals.

In a possible implementation, the information about the target model includes a parameter update amount of the updated target model relative to a second model, and the second model is an initial model of the target model.

In a possible implementation, the information about the target model includes a parameter update amount of the updated target model relative to a third model. The plurality of first devices includes a first target device. The third model is a model obtained by updating the target model in a round of iteration before the current round of iteration by the first target device.

The sending module is specifically configured to transmit the parameter update amount of the updated target model relative to the third model to the first target device.

In a possible implementation, the round of iteration before the current round of iteration is specifically a latest round of iteration in which the first target device updates the target model before the current round of iteration.

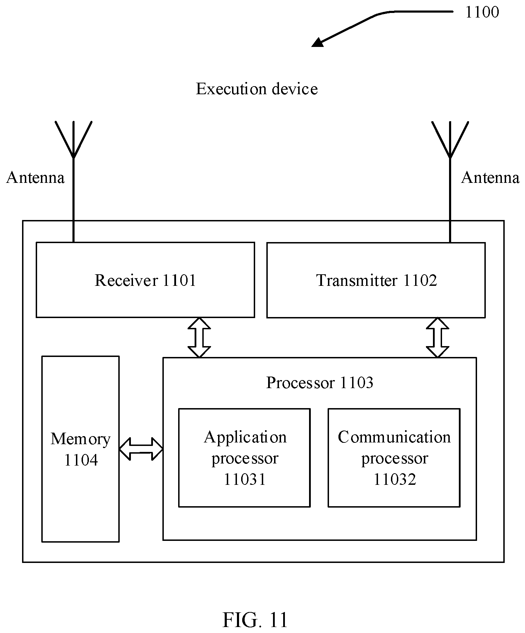

The following describes an execution device provided in embodiments of this application. Refer to FIG. 11. FIG. 11 is a diagram of a structure of an execution device according to an embodiment of this application. The execution device 1100 may be specifically represented as a mobile phone, a tablet, a notebook computer, an intelligent wearable device, a server, or the like. This is not limited herein. The model training apparatus described in the embodiment corresponding to FIG. 11 may be deployed on the execution device 1100, to implement a model training function in the embodiment corresponding to FIG. 11. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device such as a display.

In this embodiment of this application, in a case, the processor 1103 is configured to perform the method performed by the server in the embodiment corresponding to FIG. 5.

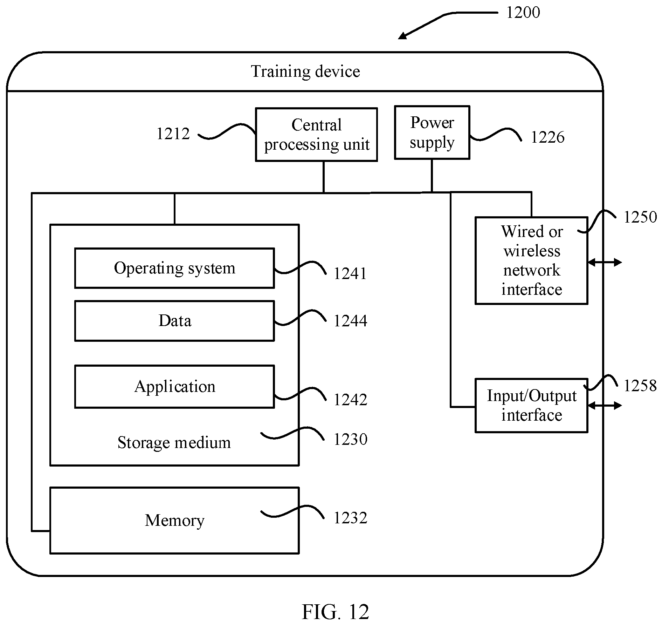

An embodiment of this application further provides a training device. Refer to FIG. 12. FIG. 12 is a diagram of a structure of a training device according to an embodiment of this application. The neural network training apparatus described in the embodiment corresponding to FIG. 10 may be deployed on the training device 1200, and is configured to implement functions of the neural network training apparatus in the embodiment corresponding to FIG. 10. Specifically, the training device 1200 is implemented by one or more servers. The training device 1200 may vary greatly with configuration or performance, and may include one or more central processing units (central processing units, CPUs) 1212 (for example, one or more processors), a memory 1232, and one or more storage media 1230 (for example, one or more mass storage devices) that store an application program 1242 or data 1244. The memory 1232 and the storage medium 1230 may be transient storage or persistent storage. A program stored in the storage medium 1230 may include one or more modules (not shown in the figure), and each module may include a series of instruction operations for the training device. Further, the central processing unit 1212 may be configured to communicate with the storage medium 1230, and perform a series of instruction operations in the storage medium 1230 on the training device 1200.

The training device 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

In this embodiment of this application, the central processing unit 1212 is configured to perform steps related to the training method in the foregoing embodiments.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the model training method described in embodiments, or a chip in a training device performs the model training method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

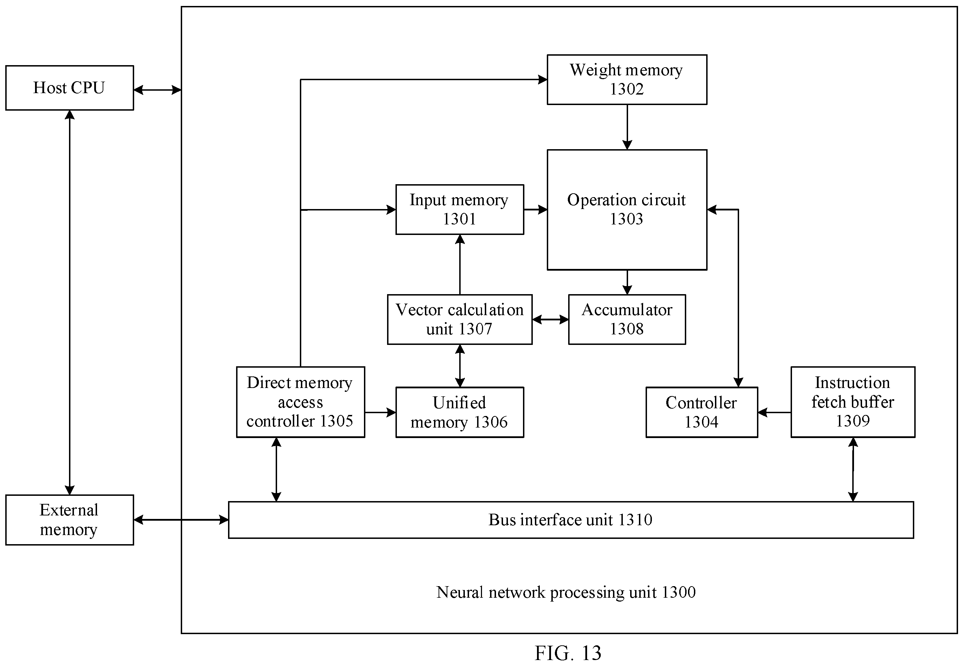

Specifically, refer to FIG. 13. FIG. 13 is a diagram of a structure of a chip according to an embodiment of this application. The chip may be represented as a neural network processing unit NPU 1300. The NPU 1300 is mounted to a host CPU (Host CPU) as a coprocessor, and the host CPU allocates a task for the NPU. A core part of the NPU is an operation circuit 1303. A controller 1304 controls the operation circuit 1303 to extract matrix data in a memory and performs a multiplication operation.

In some implementations, the operation circuit 1303 includes a plurality of process engines (Process Engines, PEs). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from the weight memory 1302, data corresponding to the matrix B, and caches the data on each PE in the operation circuit. The operation circuit fetches data of the matrix A from an input memory 1301 to perform a matrix operation on the matrix B, and stores an obtained partial result or an obtained final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. The input data is also transferred to the unified memory 1306 through the DMAC.

BIU is the abbreviation of a bus interface unit. A bus interface unit 1310 is used for interaction between an AXI bus and the DMAC and interaction between the AXI bus and an instruction fetch buffer (Instruction Fetch Buffer, IFB) 1309.

The bus interface unit 1310 (Bus Interface Unit, BIU for short) is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer the input data to the input memory 1301.

A vector calculation unit 1307 includes a plurality of operation processing units; and if necessary, performs further processing such as vector multiplication, vector addition, an exponential operation, a logarithmic operation, or value comparison on an output of the operation circuit 1303. The vector calculation unit is mainly used for non-convolutional/fully-connected layer network computation in a neural network, such as batch normalization (batch normalization), pixel-level summation, and upsampling on a feature map.

In some implementations, the vector calculation unit 1307 can store a processed output vector in the unified memory 1306. For example, the vector calculation unit 1307 may apply a linear function or a nonlinear function to the output of the operation circuit 1303, for example, perform linear interpolation on a feature map extracted at a convolutional layer. For another example, the linear function or the nonlinear function is applied to a vector of an accumulated value to generate an activation value. In some implementations, the vector calculation unit 1307 generates a normalized value, a value obtained through pixel-level summation, or both a normalized value and a value obtained through pixel-level summation. In some implementations, the processed output vector can be used as an activation input to the operation circuit 1303. For example, the processed output vector can be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

It should be further noted that the apparatus embodiments described above are merely exemplary, and the units described as separate components may be or may not be physically separate. A component displayed as a unit may be or may not be a physical unit; and may be located in one position, or may be distributed in a plurality of network units. Some or all the modules may be selected according to actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

Some or all of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A model training method, applied to a server, wherein the server communicates with a plurality of terminals, and the method comprises:

   obtaining a plurality of first gradients and a plurality of second gradients, wherein the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning; selecting some gradients from the plurality of first gradients and the plurality of second gradients, wherein the some gradients are used to update the target model in a current round of iteration of federated learning; and transmitting information about an updated target model to a plurality of first devices, wherein the plurality of first devices belong to the plurality of terminals.

2. The method according to claim 1, wherein the some gradients are a plurality of largest gradients in the plurality of first gradients and the plurality of second gradients.

3. The method according to claim 1 or 2, wherein the plurality of first gradients are obtained by aggregating a plurality of third gradients sent by a plurality of second devices in the current round of iteration, the plurality of second gradients are obtained based on gradients that correspond to the plurality of second parameters and that are determined in the previous round of iteration and a plurality of fourth gradients sent by the plurality of second devices in the current round of iteration, and the plurality of second devices belong to the plurality of terminals.

4. The method according to any one of claims 1 to 3, wherein the information about the target model comprises a parameter update amount of the updated target model relative to a first model, and the first model is a model obtained by updating the target model in a round of iteration before the current round of iteration; and
before the obtaining a plurality of first gradients and a plurality of second gradients, the method further comprises:
broadcasting a parameter value of the updated first model to the plurality of terminals.

5. The method according to any one of claims 1 to 3, wherein the information about the target model comprises a parameter update amount of the updated target model relative to a second model, and the second model is an initial model of the target model.

6. The method according to any one of claims 1 to 3, wherein the information about the target model comprises a parameter update amount of the updated target model relative to a third model, the plurality of first devices comprise a first target device, and the third model is a model obtained by updating the target model in a round of iteration before the current round of iteration by the first target device; and
the transmitting information about an updated target model to a plurality of first devices comprises:
transmitting the parameter update amount of the updated target model relative to the third model to the first target device.

7. The method according to claim 6, wherein the round of iteration before the current round of iteration is specifically a latest round of iteration in which the first target device updates the target model before the current round of iteration.

8. A system, wherein the system comprises a server and a plurality of terminals, and the server communicates with the plurality of terminals; and

the server is configured to: obtain a plurality of first gradients and a plurality of second gradients, wherein the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning;
select some gradients from the plurality of first gradients and the plurality of second gradients, wherein the some gradients are used to update the target model in a current round of iteration of federated learning; and
transmit information about an updated target model to a plurality of first devices, wherein the plurality of first devices and the plurality of second devices belong to the plurality of terminals.

9. The system according to claim 8, wherein the some gradients are a plurality of largest gradients in the plurality of first gradients and the plurality of second gradients.

10. The system according to claim 8 or 9, wherein the plurality of second devices in the plurality of terminals are configured to send a plurality of third gradients and a plurality of fourth gradients to the server, the plurality of third gradients are gradients corresponding to the plurality of first parameters in the target model, the plurality of fourth gradients are gradients corresponding to the plurality of second parameters in the target model, the plurality of first parameters are updated in the previous round of iteration of federated learning, and the plurality of second parameters are not updated in the previous round of iteration of federated learning; and

the server is specifically configured to: aggregate the plurality of third gradients to obtain the plurality of first gradients; and
aggregate the plurality of fourth gradients, and merge the plurality of fourth gradients with gradients that correspond to the plurality of second parameters and that are determined in the previous round of iteration, to obtain the plurality of second gradients.

11. The system according to claim 10, wherein the plurality of second devices in the plurality of terminals are specifically configured to: determine, in the previous round of iteration of federated learning, a plurality of gradients corresponding to the target model; and randomly select the plurality of third gradients and the plurality of fourth gradients from the plurality of gradients.

12. The system according to claim 11, wherein the plurality of second devices in the plurality of terminals are specifically configured to: perform lossless compression or linear unbiased compression on information indicating the plurality of third gradients and the plurality of fourth gradients, and send a compression result to the server.

13. The system according to any one of claims 8 to 12, wherein the information about the target model comprises a parameter update amount of the updated target model relative to a first model, and the first model is a model obtained by updating the target model in a round of iteration before the current round of iteration; and
the server is further configured to: before obtaining the plurality of first gradients and the plurality of second gradients, broadcast a parameter value of the updated first model to the plurality of terminals.

14. The system according to any one of claims 8 to 12, wherein the information about the target model comprises a parameter update amount of the updated target model relative to a second model, and the second model is an initial model of the target model.

15. The system according to any one of claims 8 to 12, wherein the information about the target model comprises a parameter update amount of the updated target model relative to a third model, the plurality of first devices comprise a first target device, and the third model is a model obtained by updating the target model in a round of iteration before the current round of iteration by the first target device; and
the server is specifically configured to transmit the parameter update amount of the updated target model relative to the third model to the first target device.

16. The system according to claim 15, wherein the round of iteration before the current round of iteration is specifically a latest round of iteration in which the first target device updates the target model before the current round of iteration.

17. A model training apparatus, used in a server, wherein the server communicates with a plurality of terminals, and the apparatus comprises:

an obtaining module, configured to obtain a plurality of first gradients and a plurality of second gradients, wherein the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning;
a gradient selection module, configured to select some gradients from the plurality of first gradients and the plurality of second gradients, wherein the some gradients are used to update the target model in a current round of iteration of federated learning; and
a sending module, configured to transmit information about an updated target model to a plurality of first devices, wherein the plurality of first devices belong to the plurality of terminals.

18. The apparatus according to claim 17, wherein the some gradients are a plurality of largest gradients in the plurality of first gradients and the plurality of second gradients.

19. The apparatus according to claim 17 or 18, wherein the plurality of first gradients are obtained by aggregating a plurality of third gradients sent by a plurality of second devices in the current round of iteration, the plurality of second gradients are obtained based on gradients that correspond to the plurality of second parameters and that are determined in the previous round of iteration and a plurality of fourth gradients sent by the plurality of second devices in the current round of iteration, and the plurality of second devices belong to the plurality of terminals.

20. The apparatus according to any one of claims 17 to 19, wherein the information about the target model comprises a parameter update amount of the updated target model relative to a first model, and the first model is a model obtained by updating the target model in a round of iteration before the current round of iteration; and
the sending module is further configured to: before the plurality of first gradients and the plurality of second gradients are obtained, broadcast a parameter value of the updated first model to the plurality of terminals.

21. The apparatus according to any one of claims 17 to 20, wherein the information about the target model comprises a parameter update amount of the updated target model relative to a second model, and the second model is an initial model of the target model.

22. The apparatus according to any one of claims 17 to 20, wherein the information about the target model comprises a parameter update amount of the updated target model relative to a third model, the plurality of first devices comprise a first target device, and the third model is a model obtained by updating the target model in a round of iteration before the current round of iteration by the first target device; and
the sending module is specifically configured to transmit the parameter update amount of the updated target model relative to the third model to the first target device.

**23.** The apparatus according to claim 22, wherein the round of iteration before the current round of iteration is specifically a latest round of iteration in which the first target device updates the target model before the current round of iteration.

**24.** A model training apparatus, wherein the apparatus comprises a memory and a processor, the memory stores code, and the processor is configured to execute the code, to implement the method according to any one of claims 1 to 7.

**25.** A computer storage medium, wherein the computer storage medium stores one or more instructions, and when the instructions are executed by one or more computers, the one or more computers are enabled to implement the method according to any one of claims 1 to 7.

**26.** A computer program product, comprising code, wherein when the code is executed, the method according to any one of claims 1 to 7 is implemented.

FIG. 1

FIG. 2

FIG. 3

A1

User 1

B1

User 2

A2

User 3

B2

End-side distributed node

Small-model
management
node A

Small-model
management
node B

Model
compression/
fusion node

Large-model
management
node

Cloud-side central node

FIG. 4

Obtain a plurality of first gradients and a plurality of second gradients, where the plurality of first gradients are gradients corresponding to a plurality of first parameters in a target model, the plurality of second gradients are gradients corresponding to a plurality of second parameters in the target model, the plurality of first parameters are updated in a previous round of iteration of federated learning, and the plurality of second parameters are not updated in the previous round of iteration of federated learning

501

Select some gradients from the plurality of first gradients and the plurality of second gradients, where the some gradients are used to update the target model in a current round of iteration of federated learning

502

Transmit information about an updated target model to a plurality of first devices, where the plurality of first devices belong to a plurality of terminals

503

FIG. 5

Client-side
user

Server

Generate a public model
parameter w_0

Send a public model

**First step**

Update a local model
and calculate a gradient

Randomly select k
gradient values as
compressed gradients

Upload the compressed
gradients of the model

$t^{th}$ global iteration, where a
current public model parameter
is w_t, and a previous public
model gradient error is err_t – 1

Aggregate received
gradients of various clients,
to obtain a gradient g_t

**Second step**

Correct a current gradient to
obtain (g_t + err_t – 1), and
take top-k large values to
update the current public
model parameter to w_t + 1

A delivered sparse gradient
is w_t + 1 – w_0

Send the sparse gradient

FIG. 6

EP 4 607 415 A1

Client-side user                          Server

Generate a public model
parameter w_0

Send a public model

Update a local model
and calculate a gradient

First step

Randomly select k
gradient values as
compressed gradients

Linear unbiased compression
solution for further compressing
communication traffic

Upload the compressed
gradients of the model

$t^{th}$ global iteration, where a
current public model parameter
is w_t, and a previous public
model gradient error is err_t − 1

Aggregate received
gradients of various clients,
to obtain a gradient g_t

Second step

Correct a current gradient to
obtain (g_t + err_t − 1), and
take top-k large values to
update the current public
model parameter to w_t + 1

A delivered sparse gradient
is w_t + 1 − w_0

Send the sparse gradient

FIG. 7

Client-side user

Server

Generate a public model parameter w_0

Send a public model

**First step**

Update a local model and calculate a gradient

Periodically broadcast a newest public model parameter w_anchor/ gradient w_anchor − w_old

Randomly select k gradient values as compressed gradients

Upload the compressed gradients of the model

$t^{th}$ global iteration, where a current public model parameter is w_t, and a previous public model gradient error is err_t − 1

Aggregate received gradients of various clients, to obtain a gradient g_t

**Second step**

Correct a current gradient to obtain (g_t + err_t − 1), and take top-k large values to update the current public model parameter to w_t + 1

A delivered sparse gradient is w_t + 1 − w_anchor

Send the sparse gradient

FIG. 8

Client-side user          Server

Generate a public model
parameter w_0

Send a public model

**First step**

Update a local model
and calculate a gradient

Randomly select k
gradient values as
compressed gradients

Upload the compressed
gradients of the model

$t^{th}$ global iteration, where a
current public model parameter
is w_t, and a previous public
model gradient error is err_t − 1

Aggregate received
gradients of various clients,
to obtain a gradient g_t

**Second step**

Correct a current gradient to
obtain (g_t + err_t − 1), and
take top-k large values to
update the current public
model parameter to w_t + 1

A delivered sparse gradient
is w_t + 1 − w_client_$i$

Send the sparse gradient

Update an $i^{th}$ client parameter
w_client_$i$ to w_t+1

FIG. 9

EP 4 607 415 A1

FIG. 10

1100

Execution device

FIG. 11

1200

Training device

1212 Central processing unit

Power supply 1226

1241 Operating system

1244 Data

1242 Application

Storage medium 1230

Memory 1232

Wired or wireless network interface 1250

Input/Output interface 1258

FIG. 12

FIG. 13

Neural network processing unit 1300

- Instruction fetch buffer 1309
- Controller 1304
- Weight memory 1302
- Operation circuit 1303
- Accumulator 1308
- Input memory 1301
- Vector calculation unit 1307
- Unified memory 1306
- Direct memory access controller 1305
- Bus interface unit 1310
- Host CPU
- External memory

## INTERNATIONAL SEARCH REPORT

| International application No. |
| --- |
| **PCT/CN2023/129211** |

### A. CLASSIFICATION OF SUBJECT MATTER

G06N20/20(2019.01)i; G06N3/04(2023.01)i

According to International Patent Classification (IPC) or to both national classification and IPC

### B. FIELDS SEARCHED

Minimum documentation searched (classification system followed by classification symbols)

IPC:G06N,G06F

Documentation searched other than minimum documentation to the extent that such documents are included in the fields searched

Electronic data base consulted during the international search (name of data base and, where practicable, search terms used)

DWPI, CNABS, WPABS, CNTXT, ENTXT, CNKI, VEN: 局部, 梯度, 模型, 联邦学习, 参数, 终端广播, 模型改变量, 参数融合, Local, gradient, model, federated learning, parameters, terminal broadcast, model change, parameter fusion

### C. DOCUMENTS CONSIDERED TO BE RELEVANT

| Category* | Citation of document, with indication, where appropriate, of the relevant passages | Relevant to claim No. |
| --- | --- | --- |
| PX | CN 115907041 A (HUAWEI TECHNOLOGIES CO., LTD.) 04 April 2023 (2023-04-04) claims 1-26 | 1-26 |
| X | CN 112070207 A (HUAWEI TECHNOLOGIES CO., LTD.) 11 December 2020 (2020-12-11) claims 1-13, and description, paragraphs 145-216 | 1, 2, 4, 5, 8, 9, 13, 14, 17, 18, 20, 21, 24-26 |
| A | CN 112818394 A (XI'AN JIAOTONG UNIVERSITY) 18 May 2021 (2021-05-18) entire document | 1-26 |
| A | CN 114422605 A (CHONGQING UNIVERSITY OF POSTS AND TELECOMMUNICATIONS) 29 April 2022 (2022-04-29) entire document | 1-26 |
| A | CN 114492723 A (HUAWEI TECHNOLOGIES CO., LTD.) 13 May 2022 (2022-05-13) entire document | 1-26 |
| A | CN 114548421 A (TSINGHUA UNIVERSITY) 27 May 2022 (2022-05-27) entire document | 1-26 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 January 2024** | **16 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 607 415 A1**

**INTERNATIONAL SEARCH REPORT**

International application No.

**PCT/CN2023/129211**

**C. DOCUMENTS CONSIDERED TO BE RELEVANT**

| Category* | Citation of document, with indication, where appropriate, of the relevant passages | Relevant to claim No. |
|---|---|---|
| A | CN 114969465 A (JINGDONG SHUKE HAIYI INFORMATION TECHNOLOGY CO., LTD.) 30 August 2022 (2022-08-30)<br>entire document | 1-26 |
| A | WO 2021204040 A1 (PING AN TECHNOLOGY SHENZHEN CO., LTD.) 14 October 2021 (2021-10-14)<br>entire document | 1-26 |
| A | WO 2021218517 A1 (HUAWEI TECHNOLOGIES CO., LTD.) 04 November 2021 (2021-11-04)<br>entire document | 1-26 |

Form PCT/ISA/210 (second sheet) (July 2022)

## INTERNATIONAL SEARCH REPORT
### Information on patent family members

International application No.

**PCT/CN2023/129211**

| Patent document cited in search report | | | Publication date (day/month/year) | Patent family member(s) | Publication date (day/month/year) |
|---|---|---|---|---|---|
| CN | 115907041 | A | 04 April 2023 | None | |
| CN | 112070207 | A | 11 December 2020 | None | |
| CN | 112818394 | A | 18 May 2021 | None | |
| CN | 114422605 | A | 29 April 2022 | None | |
| CN | 114492723 | A | 13 May 2022 | None | |
| CN | 114548421 | A | 27 May 2022 | None | |
| CN | 114969465 | A | 30 August 2022 | None | |
| WO | 2021204040 | A1 | 14 October 2021 | None | |
| WO | 2021218517 | A1 | 04 November 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211364320